Europäisches Patentamt

European Patent Office

Office européen des brevets

(19)

(11) Publication number: **0 092 246**
**B1**

(12) EUROPEAN PATENT SPECIFICATION

(45) Date of publication of patent specification: **15.06.88**

(51) Int. Cl.⁴: **G 01 N 21/78**

(21) Application number: **83103848.4**

(22) Date of filing: **20.04.83**

(54) Method and apparatus for determining concentration of gas.

(30) Priority: **20.04.82 US 370007**

(43) Date of publication of application:
**26.10.83 Bulletin 83/43**

(45) Publication of the grant of the patent:
**15.06.88 Bulletin 88/24**

(84) Designated Contracting States:
**BE DE FR GB NL**

(56) References cited:
**GB-A-2 030 296**
**US-A-3 863 490**
**US-A-4 023 930**
**US-A-4 032 297**
**US-A-4 181 699**

**Römpps Chemie-Lexikon, 8th Ed.Vol.3 page 2312**

(73) Proprietor: **UNION CARBIDE CORPORATION**
**39 Old Ridgebury Road**
**Danbury Connecticut 06817 (US)**

(72) Inventor: **Seibel, Steven Mather**
**45A Star Route**
**New Hope, Pa. 18938 (US)**
Inventor: **Boyd, Herbert Earl**
**716 Tanglewood St.**
**Frankfort, II. 60423 (US)**

(74) Representative: **Beil, Walter, Dr. et al**
**BEIL, WOLFF & BEIL Rechtsanwälte**
**Adelonstrasse 58**
**D-6230 Frankfurt am Main 80 (DE)**

## Description

### Background of the Invention

#### 1. Field of the Invention

The present invention pertains to an apparatus for the detection of toxic gas in a gas stream, comprising a test paper that is positioned in the gas stream and is sensitive to a toxic gas and progressively changes in color intensity in response to continued exposure to the gas, a light source positioned to pass a beam of light through the test paper, light sensing means responsive to the extent to which the test paper undergoes coloration in response to exposure to the toxic gas and for generating an output signal proportional to the coloration of said test paper, and means connected to said light sensing means for providing an output which is an indication of the instantaneous concentration of said toxic gas.

The present invention also pertains to a method of determining the instantaneous concentration of a gas in a gas stream by monitoring the coloration of a reagent test paper which progressively changes in color intensity in response to continued exposure to the gas.

#### 2. Description of the Prior Art

A variety of measuring devices are known which make use of the coloration of a reagent test paper for determining the presence of a specific gas or a gas component in a gas mixture or air. The devices can be used to detect an atmospheric concentration of a toxic gas such as arsine and activate an alarm when the concentration exceeds acceptable health standard levels. They are useful in the metal mining and smelting industries as well as the semi-conductor and integrated circuit industries, by way of example.

Exemplary prior art gas measuring devices are disclosed in U.S. Patent No. 4,023,930 to Blunck et. al and U.S. Patent No. 4,032,297 to Lyshkow which generally use a lamp as a light source for illuminating a test paper that is placed in a measuring .chamber through which the gas to be monitored is circulated. A light sensing means, such as a photocell, is used for detecting the increasing light absorption of the test paper due to coloration of the test paper in response to exposure to the gas. An output is provided which is a non-linear indication of the cumulative amount of gas reacted with the test paper. The devices disclosed by these patents are disadvantageous in that they do not provide an instantaneous indication of the concentration of the gas to be monitored as it is passed through the device.

An attempt at overcoming this problem is disclosed in U.S. Patent No. 4,181,699 to Kitzinger in which an apparatus provides an electronic signal which is linearly proportional to the cumulative extent of coloration on the test paper. The color intensity of the reactive test paper is compared with the colour intensity of unreacted paper or with a light-transmittance value which was produced by unreacted paper. The apparatus employs a beam splitter to split the light-source beam into one beam which is a reference beam and a second beam which is a test-paper beam. The intensity of the reference beam is adjusted with a light filter so that it represents the intensity produced by unreacted test paper. The intensity difference between the two beams represents the cumulative coloration of the test paper.

According to the Kitzinger patent, the development of color intensity on the test paper does not proceed at a linear rate, but rather at an exponential rate. Proper functioning of the apparatus requires that this rate be linearized since the electronic differentiator will not otherwise provide a true indication of the rate. Thus, after the amplifier has compared the two intensities from the light-beam sensing device and outputs a signal proportional to the difference, a signal conditioning circuit linearizes the amplifier output signal. The cumulative, linearized output signal is then differentiated by the electronic differentiator which outputs a cumulative rate of change which is electronically registered as a measurement of the toxic gas concentration.

The Kitzinger apparatus is disadvantageous in that it requires the splitting of the beam of light and it relies upon the cumulative coloration of the test paper.

### Summary of the Invention

The foregoing disadvantages of the prior art are overcome in accordance with the present invention which provides a method and apparatus for the detection of toxic gas in a gas stream.

The apparatus in the present invention is characterized by microprocessor means for receiving and for comparing two output signals that are spaced apart by a predetermined interval of time, one of said output signals being the instantaneous output signal and the other output signal being a preceding instantaneous output signal, said microprocessor means determining the rate of change $(X)$ of said output signal for said interval of time for deriving the instantaneous concentration of said toxic gas on the basis of a linear relation between said concentration and the value of said rate of change of said output signal, said microprocessor being programmed to keep track of the total reaction time and to provide the proper correction factors for the linear relation which are stored in said microprocessor as a function of a reaction time.

The method of the invention is characterized by measuring the coloration of the reagent test paper at two times spaced by a predetermined time interval, comparing the instantaneous coloration of the test paper with the amount of coloration at the immediately prior time, determining the rate of change of the coloration of the test paper, calculating the instantaneous concentration of the toxic gas on the basis of a linear relation between said concentration and the value of the rate of change $(X)$ of the coloration, keeping track of the total reaction time, and providing the proper correction factors for the linear relation which are a function of reaction time.

It is a feature of the present invention that the toxic gas concentration can be measured by using a single light beam. It is a further feature that an instantaneous value of the concentration of gas is determined by measuring the coloration of the test paper at the beginning and end of an interval, comparing the extent of coloration, and determining the rate of change of coloration from this comparison.

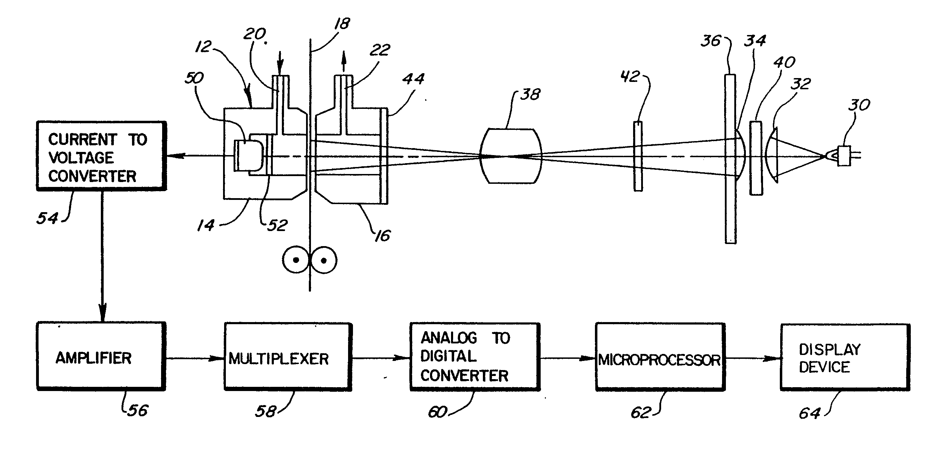

Brief Description of the Drawing

In the drawing:

The sole figure is a schematic and block diagram of the apparatus of the present invention.

Detailed Description of the Preferred Embodiment

While this invention is susceptible of embodiment in many different forms, there is shown in the drawings and will herein be described in detail one specific embodiment, with the understanding that the present disclosure is to be considered as an exemplification of the principles of the present invention, and is not intended to limit the invention to the embodiment illustrated.

Referring to the Figure, the apparatus includes a housing 12 that is made of two sections 14 and 16. A reagent test paper 18 is advanced through the housing 12, between sections 14 and 16, by means of a motor (not shown). The test paper 18 comprises a detection tape that, by way of example, can be impregnated with mercuric bromide.

The gas stream containing the toxic gas is fed through inlet 20 in section 14 of the housing by means of a suitable pump (not shown) and exits through the outlet 22 in section 16 of the housing. An O-ring or other suitable means (not shown) is located between the two sections 14 and 16 of the housing 12 to ensure sealing of the housing during measurement.

The portion of the test paper in the housing 12 is illuminated by a light beam originating from a lamp 30 acting as a light source. By way of example, the light source may comprise a 5 volt halogen cycle lamp.

The light beam is formed by plano convex lenses 32 and 34 that are located just ahead of an aperture plate 36. An image of the light beam passing through the aperture plate 36 is formed by achromatic lens 38 on the test paper 18. Various optical arrangements may be used for forming the necessary images. For example, the lenses 32 and 34 can have a 30 millimeter focal length, and the achromatic lens 38 can be a lens having a 25 millimeter focal length.

A heat absorbing glass 42 is positioned between the light source 30 and the test paper 18 to prevent heat from the lamp from affecting the moisture content of the test paper. The end of section 16 of the housing 12 is closed by a transparent plate 44 to permit the beam of light from the light source 30 to pass through.

A filter 40, which may comprise a number 42 Klett filter, is positioned between the lenses 32 and 34 for passing a color of a predetermined wave length. For example, if the coloration to be observed on the test paper is yellow, a blue filter is advantageously used.

The light passing through the test paper 18 is detected by a blue enhanced photocell 50 located behind a transparent plate 52 in section 14 of the housing. Photocell 50 is a device which provides an output current linearly proportional to the intensity of light passed by the test paper and is a direct ratio of the light sensed by the photocell. The current from the photocell 50 is converted to a voltage by the current to voltage converter 54. The voltage from the converter 54 is amplified by means of an amplifier 56. The output voltage from the amplifier 56 is fed to an analog multiplexer 58 where it is multiplexed with other analog signals. The multiplexer output is fed to an analog to digital converter 60 with 12 bit resolution. The converter can resolve 1 millvolt signal changes. Other multiplexer inputs are used to sense other signals, such as the temperature.

The output from the analog to digital converter 60 is the digital equivalent of the current from the photocell 50. This digital value is fed to a microprocessor 62.

In accordance with the present invention, the photocell takes a reading of the light intensity at predetermined intervals of time, such as every 10 seconds. The photocell takes an initial instantaneous reading of the light intensity, and the digital value is stored in the microprocessor. When the photocell takes the next reading after the interval of time, the digital data which is representative of the photocell current is subtracted from the value which was input previously and stored in memory. The resulting value is processed by a microprocessor program subroutine which converts the change in sensor current over the period of time to a gas concentration value that can be visually displayed on the display device 64. When the concentration exceeds a predetermined safe level, the microprocessor causes an alarm bell to sound as a warning.

The determination of the concentration of toxic gas from the change in detector voltage observed over the ten second interval is made with computing techniques. The ten second interval detector voltages are inputted into the microprocessor where they are compared, and the change in detector voltage is computed. This change is then used in an experimental formula to calculate the concentration.

According to Beer's Law, the light transmittance through the detection tape is not a theoretical straight line. Instead it follows an exponential curve function according to the formula: $I = I_0 e^{-\varepsilon cd}$ (see Röm pps Chemie Lexikon, 8th Ed. Vol. 3, page 2312 "Lambert-Beersches gésetz"). Accordingly, the variable light transmittance as measured by the photocell is not linearly porportional to the concentration of gas to be detected as a function of a straight line curve. As a result, use of a linear mathematical formula for the computation of gas concentration from detector voltage over an entire range of concentrations and over an entire time period for reaction of the detection tape with the gas, i.e., from an unreacted state to a completely reacted state, is not appropriate.

There are several approaches for the computation of a corrected concentration which will take into account or adjust for the exponential relationship between the concentration and the detector voltage. These include employing a linear formula coupled with use of the tape-gas reaction while it is on the linear portion of the exponential curve and employing a linear formula for the complete exponential curve but adding a correction factor provided by a matrix table or a correction factor formula determined by the reaction position along the exponential curve.

The first approach employs a linear formula of the expression $C = AX + K$ wherein C is the gas concentration, A is the slope of the line, X is the change in detector voltage over a period such as a ten second interval and K is a constant. The formula approximate that portion of the exponential curve which is about linear. According to this approach, the tape is changed when the actual slope of the exponential curve creates such non-linearity that the concentration becomes erroneous. Using a set of experimentally generated detector voltages at known concentrations, the straight line formula constants and slope as well as the total time interval for allowance of tape reaction so that a straight line portion of the exponential curve is approximated, can be determined. With this method, in this embodiment for example, the arsine formula has been found to be $C = 3.94X + 1.77$ where X is the change in detector voltage over a ten second interval. With an initial detector voltage at an initial transmittance of the tape of about three volts, the tape can be allowed to react with gas until the detector voltage decreases to about 2.5 volts. Below this minimum voltage, the non-linearity causes an erroneous concentration reading.

In another example, for phosphine, the formula has been determined to be $C = 25.7X - 83.4$ where X is the change in detector voltage over a ten second interval. Again, with an initial detector voltage of about three volts produced by unreated tape transmittance, the tape is allowed to react until the voltage has decreased to about 2.5 volts.

Operation of the machine in this fashion requires substantial use of detection tape because the tape must be frequently changed in order to avoid the use of transmittance values produced by near maximum coloration. During these tape changes, gas concentration cannot be measured.

A second approach employs the use of correction factors which supplement the linear formula for the determination of the concentration of gas. This approach allows the use of transmittance values produced when the coloration of the tape is approaching a maximum and permit relatively infrequent change of the detection tape. It may also provide a better representation of the true concentration. In this approach, the microprocessor memory is loaded with the initial transmittance value, i.e., the initial detector voltage, and is programmed to keep track of the time of reaction, for example, by counting the number of ten second interval detection measurements made. Using the initial transmittance value and the time of reaction, the microprocessor can then determine the point along the exponential curve to which the reaction has proceeded and can then employ a correction factor to determine the proper concentration.

The correction factor is produced experimentally by conducting a series of standardization tests at a number of known concentrations of appropriate gases over a relevant concentration range. For example, arsine may range from 25 ppb to 1 ppm. A record of the concentrations produced using the linear formula is made along with a strip chart recording of the detector voltage versus time. With the known set of values for the concentrations of gas, the calculated linear formula concentration values and the observed detector current change versus time, a correction factor can be determined. The correction factor will be a function of reaction time and will be applied to the actual rate of change of detector current to give an accurate concentration. In particular, the correction factor produced by this correction method may be a number matrix giving reaction times and detector voltages as matrix parameters for choice of a numerical correction factor to be added to the detector voltage to give the proper concentration. Alternatively, the correction may be an experimental formula which approximates the number matrix and can be determined by reiterative mathematical techniques wherein the formula will provide a correction factor as a function of reaction time and detector voltage. Using either correction factor method, the parameters and values are loaded as a program into the microprocessor for use with the linear formula to calculate the concentration. The microprocessor will determine the linear formula concentration, go to either the formula or the matrix and use the reaction time and the detector voltage to select a proper correction factor to be added to the detector voltage to produce an accurate concentration readout.

In addition to calculating the concentration, the microprocessor controls all mechanical and electrical parts of the apparatus. The mechanical and electrical functions of the elements are standard and can be handled by integrated circuit chip programming techniques according to the skill of one familiar with the art. In a simple example, a program for controlling the detection tape advance or for controlling the internal self-check systems is written, the program is transferred to an integrated circuit chip using a controlled chip production facility. The programmed chip is produced with a burned-in program which contains the microprocessing instructions for carrying out the desired particular electrical or mechanical processes. These techniques and methods for the electrical and mechanical functions as well as those for programming the calculation of the concentration and employing memory techniques are known to those skilled in the art.

In a preferred embodiment, the gas concentration calculation system, including the photocell and microprocessor, comprise a slave component, and control and display device comprise a master component. A plurality of slave components can be interfaced with the master component so that readings of gas concentrations can be made simultaneously at a plurality of locations.

In accordance with the present invention, electronic and optic systems are employed to measure interval rate of change with one light beam and a computer is employed, all for determining the instantaneous value of the concentration of toxic gas. Unlike prior art devices, the apparatus does not rely exclusively on a reading of the cumulative amount of toxic gas that has reacted with the test paper, nor does it use a linearization circuit to linearize the electronic output from the light sensing device. Moreover, it does not employ a differentiator circuit to provide an indication of the cumulative amount or extent of toxic gas that has reacted with the test paper.

From the foregoing, it will be observed that numerous variations and modifications may be effected without departing from the scope of the claims. It is to be understood that no limitation with respect to the specific device illustrated herein and the method described herein is intended or should be inferred. It is, of course, intended to cover by the appended claims all such modifications as fall within the scope of the claims.

## Claims

1. Apparatus for the detection of toxic gas in a gas stream, comprising a test paper (18) that is positioned in the gas stream and is sensitive to a toxic gas and progressively changes in color intensity in response to continued exposure to the gas, a light source (30) positioned to pass a beam of light through the test paper (18), light sensing means (50) responsive to the extend to which the test paper (18) undergoes coloration in response to exposure to the toxic gas and for generating an output signal proportional to the coloration of said test paper (18), and means (54) connected to said light sensing means for providing an output which is an indication of the instantaneous concentration of said toxic gas, characterized by microprocessor means (62) for receiving and for comparing two output signals that are spaced apart by a predetermined interval of time, one of said output signals being the instantaneous output signal and the other output signal being a preceding instanteous output signal, said microprocessor means determining the rate of change (X) of said output signal for said interval of time for deriving the instantaneous concentration of said toxic gas on the basis of a linear relation between said concentration and the value of said rate of change of said output signal, said microprocessor being programmed to keep track of the total reaction time and to provide the proper correction factors for the linear relation which are stored in said microprocessor as a function of reaction time.

2. Apparatus as defined in claim 1 wherein a single beam of light is passed through the test paper.

3. Apparatus as defined in claim 1 wherein said test paper is stationary during a monitoring cycle.

4. Apparatus as defined in claim 1 wherein a housing is provided, said gas stream passes through said housing, and said test paper is positioned in said gas stream.

5. Apparatus as defined in claim 1 wherein a display device is connected to said microprocessor means for providing a visual indication of the concentration of said toxic gas.

6. A method of determining the instantaneous concentration of a gas in a gas stream by monitoring the coloration of a reagent test paper which progressively changes in color intensity in response to continued exposure to the gas, characterized by measuring the coloration of the reagent test paper at two times spaced by a predetermined time interval, comparing the instantaneous coloration of the test paper with the amount of coloration at the immediately prior time, determining the rate of change of the coloration of the test paper, calculating the instantaneous concentration of the toxic gas on the basis of a linear relation between said concentration and the value of the rate of change (X) of the coloration keeping track of the total reaction time, and providing the proper correction factors for the linear relation which are a function of reaction time.

## Patentansprüche

1. Vorrichtung zur Bestimmung der Konzentration eines toxischen Gases in einem Gasstrom, umfassend ein im Gasstrom angeordnetes, gegenüber dem toxischen Gas sensitives Testpapier (18), das infolge seiner Exposition in Gasstrom fortschreitend seine Farbintensität verändert, eine Lichtquelle (30), die so angeordnet ist, daß ein Lichtstrahl durch das Testpapier (18) geleitet wird, Mittel (50) zur Lichtmessung, die auf das Ausmaß der Farbveränderung des Testpapiers (18) infolge seiner Exposition im toxischen Gas ansprechen und ein Ausgangssignal erzeugen, das proportional zur Färbung des Testpapiers (18) ist, und Mittel (54), die mit den Mitteln (50) zur Lichtmessung verbunden sind und ein Ausgangssignal liefern, das die momentane Konzentration des toxischen Gases anzeigt, gekennzeichnet durch Mikroprozessoren (62) zum Empfang und Vergleich zweier Ausgangssignale, die ein vorgegebenes Zeitintervall auseinanderliegen, wobei das eine dieser Ausgangssignale das momentane und das andere das vorangehende momentane Ausgangssignal ist, und wobei dieser Mikroprozessor das Ausmaß der Änderung (X) dieses Ausgangssignals für das genannte Zeitintervall bestimmt, um daraus die momentane Konzentration des toxischen Gases auf der Basis einer linearen Bezeihung zwischen der Konzentration und dem Ausmaß der Änderung dieses Ausgangssignals abzuleiten, und dabei so programmiert ist, um die gesamte Reaktionszeit zu verfolgen, und um die geeigneten Korrekturfaktoren für die lineare Beziehung zu liefern, welche in diesem Mikroprozessor als Funktion der Zeit gespeichert sind.

2. Vorrichtung gemäß Anspruch 1, worin ein einziger Lichtstrahl über das Testpapier geleitet wird.

3. Vorrichtung gemäß Anspruch 1, worin das Testpapier während eines Aufnahmezyklus fest bleibt.

4. Vorrichtung gemäß Anspruch 1, worin ein Gehäuse vorhanden ist, der Gasstrom dieses Gehäuse passiert und der Teststreifen in dem Gasstrom angeordnet ist.

5. Vorrichtung gemäß Anspruch 1, worin eine Anzeigevorrichtung mit dem Mikroprozessor verbunden ist, um eine visuelle Anzeige der Konzentration des toxischen Gases zu liefern.

6. Verfahren zur Bestimmung der momentanen Konzentration eines Gases in einem Gasstrom durch Kontrolle der Färbung eines Reagenstestpapiers, welches fortschreitend die Farbintensität infolge seiner Exposition im Gas ändert, dadurch gekennzeichnet, daß die Färbung des Reagenstestpapiers zu zwei in einem vorbestimmten Zeitintervall auseinanderliegenden Zeitpunkten gemessen wird, die momentane Färbung des Testpapiers mit der unmittelbar davorliegenden Färbung verglichen wird, das Ausmaß der Farbänderung des Testpapers bestimmt wird, die momentane Konzentration des toxischen Gases auf der Basis einer linearen Beziehung zwischen dieser Konzentration und dem Wert für das Ausmaß (X) der Farbveränderung berechnet wird, die gesamte Reaktionszeit verfolgt wird, und geeignete Korrekturfaktoren, welche eine Funktion der Zeit sind, für die lineare Beziehung bereitgestellt werden.

**Revendications**

1. Appareil de détection d'un gaz toxique dans un courant gazeux, comprenant un papier indicateur (18) qui est placé dans le courant gazeux et est sensible à un gaz toxique et dont l'intensité de coloration varie progressivement en réponse à une exposition continue au gaz, une source de luminère (30) placée de manière à faire passer un faisceau de lumière à travers le papier indicateur (18), un dispositif photosensible (50) sensible au degré de variation de coloration que subit le papier indicateur (18) en réponse à l'exposition au gaz toxique et destiné à produire un signal de sortie proportionnel à la coloration dudit papier indicateur (18), et un dispositif (54), relié audit dispositif photosensible, destiné à fournir un signal de sortie qui constitue une indication de la concentration instantanée dudit gaz toxique, caractérisé en ce qu'il comprend un microprocesseur (62) destiné à recevoir et à comparer deux signaux de sortie qui sont distants d'un intervalle de temps prédéterminé, l'un de ces signaux de sortie étant le signal de sortie instantané et l'autre signal de sortie étant un signal de sortie instantané le précédant, ledit microprocesseur déterminant la vitesse de variation (X) dudit signal de sortie pendant ledit intervalle de temps afin de déduire la concentration instantanée dudit gaz toxique, sur la base d'une relation linéaire entre ladite concentration et la valeur de ladite vitesse de variation dudit signal de sortie, ledit microprocesseur étant programmé de manière à noter le temps total de réaction et à fournir les facteurs de correction convenables pour la relation linéaire, facteurs qui sont emmagasinés dans ledit microprocesseur en fonction du temps de réaction.

2. Appareil suivant la revendication 1, dans lequel un seul faisceau de lumière est passé à travers le papier indicateur.

3. Appareil suivant la revendication 1, dans lequel le papier indicateur est fixe au cours d'un cycle de contrôle.

4. Appareil suivant la revendication 1, dans lequel un boîtier est installé, le courant gazeux passant à travers ledit boîtier, et ledit papier indicateur étant placé dans ledit courant gazeux.

5. Appareil suivant la revendication 1, dans lequel un dispositif d'affichage est relié au microprocesseur pour donner une indication visuelle de la concentration dudit gaz toxique.

6. Procédé de détermination de la concentration instantanée d'un gaz dans un courant gazeux par contrôle de la coloration d'un papier réactif indicateur dont l'intensité de coloration varie progressivement en réponse à une exposition continue au gaz, caractérisé en ce qu'il consiste à mesurer la coloration du papier réactif indicateur à deux moments espacés d'un intervalle de temps prédéterminé, à comparer la coloration instantanée du papier indicateur au degré de coloration au temps immédiatement antérieur, à déterminer la vitesse de variation de la coloration du papier indicateur, à calculer la concentration instantanée du gaz toxique sur la base d'une relation linéaire entre ladite concentration et la valeur de la vitesse de variation (X) de la coloration, à noter le temps total de réaction, et à fournir les facteurs de correction convenables pour la relation linéaire, facteurs qui sont fonction du temps réaction.

CURRENT TO VOLTAGE CONVERTER

AMPLIFIER

MULTIPLEXER

ANALOG TO DIGITAL CONVERTER

MICROPROCESSOR

DISPLAY DEVICE